# EUROPÄISCHE PATENTSCHRIFT

(11) **EP 2 125 153 B1**
(45) Veröffentlichungstag und Bekanntmachung des Hinweises auf die Patenterteilung: **10.11.2010**
(21) Anmeldenummer: 08801803.1
(22) Anmeldetag: 03.09.2008
(51) Int. Cl.: B01D 46/00, B01D 46/02

(54) **FILTERANORDNUNG ZUM REINIGEN VON PARTIKELBELASTETEN PROZESSGASEN UND VERFAHREN ZUM REINIGEN VON FILTEREINHEITEN EINER SOLCHEN FILTERANORDNUNG**
FILTER ARRANGEMENT FOR CLEANING PROCESS GASES CONTAMINATED WITH PARTICLES, AND METHOD FOR CLEANING FILTER UNITS OF SUCH A FILTER ARRANGEMENT
DISPOSITIF DE FILTRAGE DESTINÉ À LAVER DES GAZ DE TRAITEMENT CHARGÉS EN PARTICULES ET PROCÉDÉ DE LAVAGE D'UNITÉS DE FILTRAGE D'UN TEL DISPOSITIF DE FILTRAGE

(30) Priorität: 04.09.2007 DE 102007041733
(43) Veröffentlichungstag der Anmeldung: 02.12.2009
(73) Patentinhaber: Hüttlin Gmbh, 79650 Schopfheim (DE)
(72) Erfinder: GROSS, Martin, 79585 Steinen (DE); SCHMIDT, Uwe, 79650 Schopfheim (DE); MACHO, Christoph, 79585 Steinen (DE); KNÖLL, Marcus, 79539 Lörrach (DE)
(74) Vertreter: Lempert, Jost
(86) Internationale Anmeldenummer: PCT/EP2008/007170
(87) Internationale Veröffentlichungsnummer: WO 2009/030462

(56) Entgegenhaltungen:
- WO-A-01/51172
- WO-A-02/43835
- DE-A1- 2 551 117
- DE-A1- 2 604 493
- DE-A1- 2 634 965
- DE-A1- 4 029 994
- DE-A1- 10 124 526

## Beschreibung

Die Erfindung betrifft eine Filteranordnung zum Reinigen von mit Partikeln verunreinigten Gasen nach dem Oberbegriff des Anspruchs 1 sowie ein Verfahren zum Reinigen mindestens einer Filtereinheit nach dem Oberbegriff des Anspruchs 11.

Die Erfindung bezieht sich auf eine Filteranordnung, die oberhalb und auf einem Prozessbehälter angeordnet ist, in dem partikelförmiges Gut behandelt wird, wie durch Mischen, Trocken, Granulieren, Pelletieren und/oder Beschichten (Coaten) des Gutes. Der Prozess kann darin bestehen, dass staubfeine Gutpartikel im Prozessbehälter zu größeren Partikeln agglomeriert bzw. granuliert werden oder aber partikelförmiges Ausgangsgut mittels Beschichten (Coaten) mit einem Überzug versehen werden. Hierzu ist im Bodenbereich des Prozessbehälters in der Regel ein luftdurchlässiger Boden vorgesehen, der Durchlässe, insbesondere in Form von Schlitzen, aufweist.

Derartige Filtereinheiten sind in der WO 01/51172 A3 und in der WO 02/43835 beschrieben, in welchen vertikal ausgerichtete Filterschläuche angeordnet sind, wobei oberhalb der Filterschläuche Waschdüsen vorgesehen sind, um den Staubluftraum mit Wasser zu benetzen. Nachteilig hierbei ist, dass eine vollständige Reinigung der Filterschläuche mit dieser Anordnung nicht erfolgen kann.

Aus der DE 26 34 965 ist eine Entstaubungsvorrichtung bekannt, welche aus einer bestimmten Anzahl Gewebeschläuchen besteht, die ihrerseits jeweils einen weiteren Gewebeschlauch umschließen, der an seinem oberen Ende geschlossen ist. Staubteilchen setzen sich an der Innenwand der äußeren Gewebeschläuche und an die Außenwand der inneren Gewebeschläuche ab.

Eine weitere Filtereinheit, bestehend aus einem zylindrischen Außenfilter und einem sich konisch von unten nach oben verjüngenden Innenfilter, ist aus der DE 40 29 994 C2 bekannt. Im Gut behandelnden Prozessbetrieb, wird mit Partikeln verunreinigte Luft, wie Staubluft von außen durch den Außenfilter und von innen durch den Innenfilter in einen Zwischenraum zwischen Außen- und Innenfilter der Filtereinheit und über ein geöffnetes Ventil zu einem Gasauslass gefördert.

Zum Abblasen auf der Außenseite des Außenfilters und der Innenseite des Innenfilters angesammelten Staubs wird das Ventil geschlossen und über ein weiteres Ventil ein Luftweg von einem Gaseinlass für Reingas zum Zwischenraum zwischen Innen- und Außenfilter geöffnet, so dass in Gegenströmung ein Abblasen von auf der Außenseite des Außen- und der Innenseite des Innenfilters haftenden Partikels erfolgen kann. Hiermit ist ein vollständiges Reinigen auf der der Staubluft zugewandten Seite der Filter nicht immer möglich, ein Entfernen von in den Reinluftbereich eingedrungenen Filterstaub ist nur schwer durchführbar. Zu einer vollständigen Reinigung der Filtereinheit muss diese ausgebaut und zerlegt und die einzelnen Filter müssen dann einzeln gereinigt werden. Beim Stand der Technik ist also eine Reinigung am Ort oder ein Cleaning in Place (CIP) ohne Ausbau der Filterpatronen nicht möglich.

Der Erfindung liegt daher die Aufgabe zugrunde, eine Filteranordnung der eingangs genannten Art zu schaffen, die und insbesondere deren Filtereinheiten vollständig und umfassend am Ort gereinigt werden können und ein Verfahren zur Durchführung einer solchen Reinigung anzugeben.

Erfindungsgemäß wird die genannte Aufgabe bei einer Filteranordnung der eingangs genannten Art durch die kennzeichnenden Merkmale des Anspruchs 1 gelöst.

Zur Reinigung sieht die Erfindung ein Verfahren der oben genannten Art mit den kennzeichnenden Merkmalen des Anspruchs 11 vor.

Dadurch, dass die beiden Einzelfilter, Innen- und Außenfilter, der Filtereinheit der erfindungsgemäßen Filteranordnung nicht fest miteinander verbunden sind, sondern am Ort durch Relativbewegung in ihrem unteren Bereich ein Spalt oder Schlitz freigegeben werden kann, ist es möglich, zum einen ein Reinigen, wie dies nach dem vorstehenden grundsätzlichen Verfahrensschritt vorgesehen ist, mittels in den Reinraumbereich zwischen Innen- und Außenfilter eingesprühter (CIP-)Flüsssigkeit durchzuführen, die durch sie mitgenommenen Verunreinigungen durch den Spalt aus der Filtereinheit austreten und dann über die Prozessanordnung weiter entfernt werden kann. Weiterhin ist es möglich, bei der Ausgestaltung der Filtereinheit mit Metallfiltern eine Ultraschallreinigung vorzunehmen, wozu ein flüssiges Kopplungsmedium zwischen Innen- und Außenfilter erforderlich ist, in den Zwischenraum derart eingefüllt werden kann, dass mehr Flüssigkeit zugeführt wird, als durch die Filter selbst austreten kann, wobei ein Ultraschallwandler zur Erzeugung des Ultraschalls im Kopplungsmedium in dieses ragt und schließlich nach erfolgter Reinigung die Kopplungsflüssigkeit zusammen mit von den Filtern abgelösten Verunreinigung durch Öffnen des Spaltes wiederum durch diesen abfließen kann. Schließlich ist es möglich, bei geöffnetem Spalt eine Trocknung der Filter innen- und außenseitig durch von der Schlitzscheibe der Prozessanordnung einströmender Trocknungsluft durchzuführen.

In Weiterbildung sieht die Erfindung vor, dass Außen- und Innenfilter unter Freigabe eines Ringspaltes relativ zueinander bewegbar sind, wobei insbesondere der Innenfilter relativ zum Außenfilter anhebbar ist oder aber der Innenfilter relativ zum Außenfilter absenkbar ist. Der Antrieb zur Erzeugung der Relativbewegung zwischen Innen- und Außenfilter erfolgt durch eine Antriebseinrichtung außerhalb der Filtereinheit, beispielsweise über eine Betätigungsstange. Um die durch die erfindungsgemäße Ausgestaltung der Filteranordnung geschaffenen Möglichkeiten zur Reinigung vollständig auszunutzen, sieht die Erfindung in Weiterbildung eine Einrichtung zum Einblasen von Fluid, insbesondere Gas, in den reingasseitigen Bereich der Filtereinheit und eine Einrichtung zum Absperren des reinraumseitigen Bereichs der Filtereinheit gegenüber einem Auslass und durch eine in den reinraumseitigen Bereich der Filtereinheit ragende Lanze zum Einsprühen von Reinigungsflüssigkeit in diesen Bereich der Filtereinheit sowie durch eine in den der Reingasseite abgewandten Außenraum der mindestens einen Filtereinheit, insbesondere in einen diese umgebenden Filterdom ragende Reinigungslanze zum Reinigen der dem teilchenbeladenden Gas ausgesetzten Seiten der Filtereinheit mittels Flüssigkeit vor.

In Weiterbildung des erfindungsgemäßen Verfahrens ist vorgesehen, dass der Spalt im unteren Bereich zwischen Außen- und Innenfilter der mindestens einen Filtereinheit durch Absenken oder Anheben des Innenfilters gegenüber dem Außenfilter geöffnet und durch entgegengesetzte Bewegung geschlossen wird. Im Rahmen des erfindungsgemäßen Verfahrens können Reinigungsschritte derart vorgesehen sein, dass vorzugsweise vorab, unter Abschluss eines Gasauslasses vom reinraumseitigen Bereich der Filtereinheit Reinigungsgas in die Filtereinheit und entgegen der Strömungsrichtung beim Reinigungsbetrieb derselben durch deren Filter eingeblasen wird, dass dem Reingasraum der Filtereinheit abgewandte Bereiche des Filters mittels einer aus einer Reinigungslanze ausgestoßenen Reinigungsflüssigkeit gereinigt werden und dass, wie schon gesagt, ein Trocknen der mindestens einen Filtereinheit unter Öffnen des Spaltes zwischen Außen- und Innenfilter erfolgt. Zur Reinigung mittels Ultraschall sieht die Erfindung vor der Trocknung vor, dass Metallfilter der Filtereinheit unter Einbringen von Kopplungsflüssigkeit in den Zwischenraum zwischen Außen- und Innenfilter bei geschlossenem Spalt zwischen den beiden Filtern mittels einer in den Zwischenraum ragenden Ultraschallquelle gereinigt werden.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigt:
- Fig. 1: einen schematischen vertikalen Längsschnitt durch eine erfindungsgemäße Filteranordnung auf einem Prozessbehälter;
- Fig.2: einen Längsschnitt durch die Oberseite eines Filterdoms mit zwei Filtereinheiten, deren rechte Prozessluft filtert, während die linke auf Reinigung der Filter geschaltet ist;
- Fig. 3: einen Längsschnitt durch die erfindungsgemäße Filteranordnung mit Darstellung der reingas- seitigen Reinigung der Filter mittels Reini- gungsflüssigkeit;
- Fig. 4: eine Filteranordnung, die zusätzlich mit ei- ner Ultraschall-Quelle zur US-Reinigung bei Metallfiltern versehen ist;
- Fig. 5: eine Darstellung der erfindungsgemäßen Fil- teranordnung zur Veranschaulichung des Trockungsvorgangs der Filter;
- Fig.6: alternative Ausgestaltungen der Relativbeweg- lichkeit von Innen- und Außenfilter der Fil- tereinheiten; und
- Fig.7: alternative Ausgestaltungen der Relativbeweg- lichkeit von Innen- und Außenfilter der Fil- tereinheiten mit einem absenkbaren Zwischen- boden.

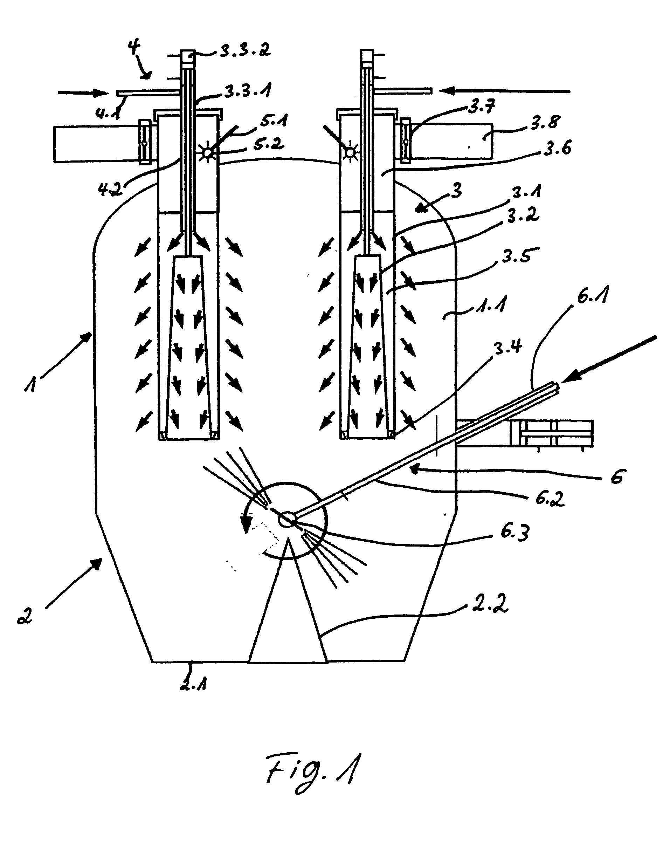

In der Fig. 1 ist die erfindungsgemäße Filteranordnung 1 auf einem von oben nach unten konisch zulaufenden Prozessbehälter 2 angeordnet. In einem solchen Prozessbehälter 2 wird beispielsweise partikelförmiges Gut behandelt, wie z.B. durch Mischen, Trocknen, Granulieren, Pelletieren und/oder Beschichten (Coaten) des Gutes. So können staubfeine Gutpartikel in den Prozessbehälter zu größeren Partikeln agglomeriert und damit granuliert werden oder aber partikelförmiges Ausgangsgut durch Beschichten mit einem Überzug versehen werden. Hierzu ist im Bodenbereich des Prozessbehälters 2 in der Regel ein luftdurchlässiger Boden 2.1 vorgesehen, der Durchlässe, insbesondere in Form von Schlitzen aufweist. In diesem Boden oder in der zylindrischen Wand integriert können Düsen angeordnet sein, welche ein Aufsprühen eines Überzugsmediums ermöglichen.

Die erfindungsgemäße Filteranordnung 1 weist mehrere, in der Regel drei bis sechs Filtereinheiten 3 in einem gehäuseartigen Filterdom 1.1 auf. Eine solche Filtereinheit 3 hat einen Außenfilter Filter 3.1 und einen Innenfilter 3.2, wobei der Außenfilter 3.1 in der Regel und im dargestellten Ausführungsbeispiel zylindrisch ist, während der Innenfilter 3.2 in der Regel und im dargestellten Ausführungsbeispiel konisch ausgebildet ist und zwar sich von unten nach oben verjüngend.

Im Prozessbetrieb, d.h. wenn die Filtereinheiten 3 die im Prozessbehälter 2 und im Filterdom 1.1 befindliche staubbelastete Luft bzw. ein dort befindliches staubbelastetes Gas reinigen oder entstauben, fluchten die Unterkanten von Außenfilter 3.1 und Innenfilter 3.2 miteinander und sind über einen geschlossenen Ringbereich 3.4 miteinander verbunden, wie es dem Stand der Technik entspricht. Die Oberseite des Innenfilters 3.2 endet unterhalb des oberen Endes des Außenfilters 3.1. Durch die derart als Doppelfilter ausgebildete Filtereinheit 3 mit Außenfilter 3.1 und Innenfilter 3.2 wird die Filterfläche gegenüber einem beispielsweise zylindrischen Einfachfilter deutlich vergrößert, nahezu verdoppelt.

Der ringmantelförmige Zwischenraum 3.5 zwischen Außen- und Innenfilter 3.1, 3.2, in den die Reinluft durch die Filter strömt steht mit einem Auslassbereich 3.6 für die Reinluft oberhalb des Innenfilters 3.2 in Verbindung, der wiederum über eine zu öffnende Verschlussklappe 3.7 mit einem Abluftrohr 3.8 in Fluidverbindung steht.

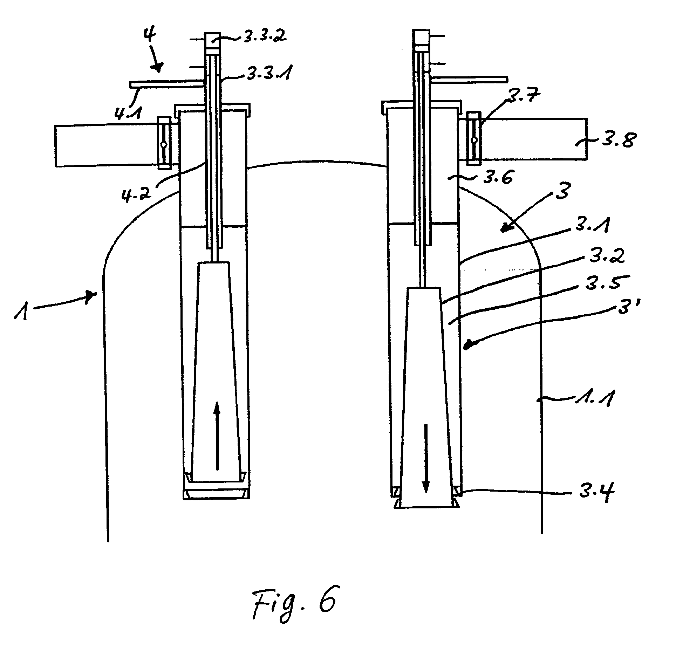

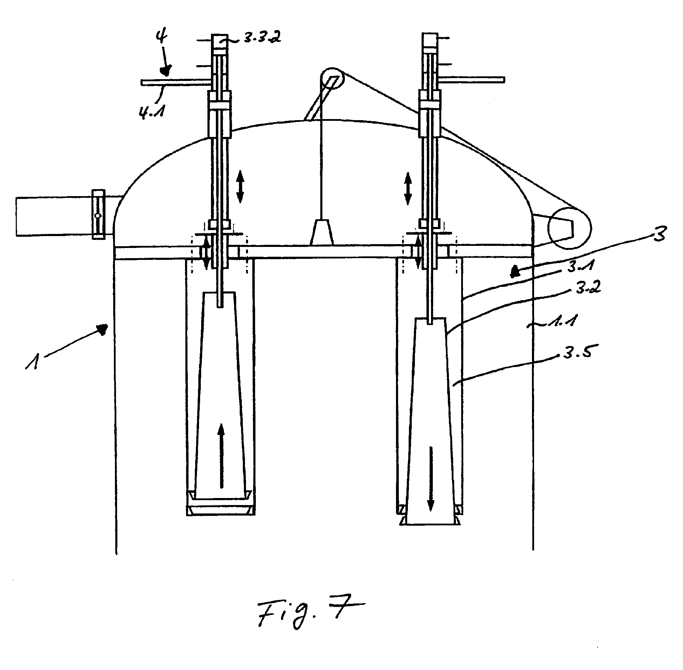

Der Innenfilter 3.2 ist über eine Betätigungsstange 3.3.1 mit einem Antrieb 3.3.2 verbunden, durch welchen der Innenfilter 3.1 im dargestellten Ausführungsbeispiel der Fig. 1 gegenüber dem Außenfilter 3.2 abgesenkt oder aber - beim linken Ausführungsbeispiel der Figuren 6 und 7 - auch angehoben werden kann, wodurch zwischen den unteren Bereichen von Außen- und Innenfilter 3.1, 3.2 ein Ringspalt 3.9 zum Zwischenraum 3.5 zwischen Außen- und Innenfilter 3.1, 3.2 geöffnet wird. Der Antrieb kann beispielsweise ein hydraulischer oder pneumatischer Antrieb mit einer Kolbenzylinderanordnung oder aber auch ein elektrischer Antrieb, sei es ein elektromotorischer oder elektromagnetischer Antrieb sein.

Weiterhin ist eine Abreinigungsanordnung 4 vorgesehen, die eine Fluidzuführungsleitung 4.1 und eine in den Auslassbereich 3.6 ragende Lanze 4.2 aufweist, die im dargestellten Ausführungsbeispiel die Antriebsstange 3.3.1 zylindrisch umgibt und an ihrem unteren Ende - mit vertikalem Abstand zur Oberseite des Innenfilters 3.2 eine Austrittsöffnung aufweist. Hiermit kann die Reinluftseite der Filter gereinigt werden, wie dies weiter unten noch beschrieben wird.

In den Abluftraum 3.6 für das Prozessgas ragt eine Reinigungslanze 5.1 mit einem Auslass 5.2 für ein Reinigungsfluid.

Schließlich findet sich im unteren Bereich des Filterdoms 1.1 ein Zielstrahlreiniger 6 mit einer Flüssigkeitszuführung 6.1, einer etwa mittig in den Filterdom 1.1 ragenden Lanze 6.2 und einer am Ende der Lanze 6.2 angeordneten Auslassdüse 6.3. Hierdurch kann, wie weiter unten beschrieben wird, eine Reinigung der Außenseite der Filter 3.2, 3.3. erfolgen.

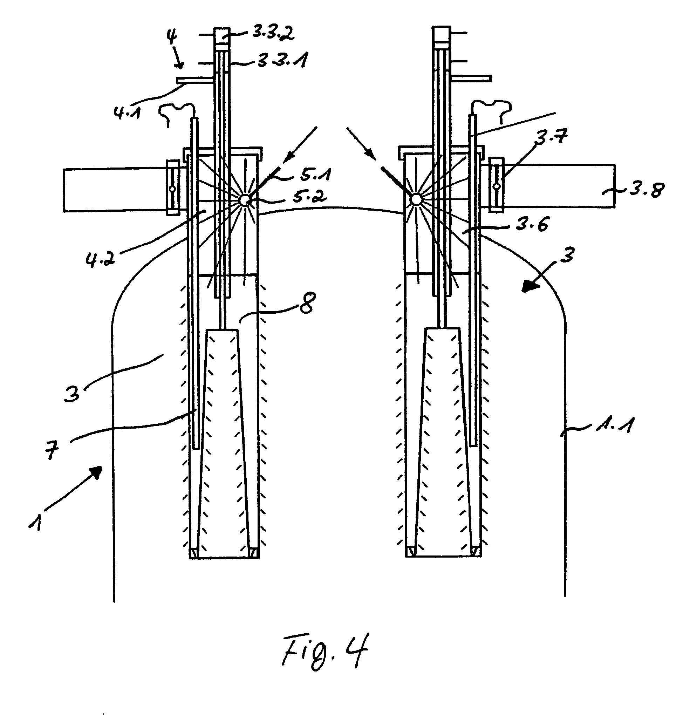

Bei der Ausgestaltung der Fig. 4 sind die Filter Metallfilter, weisen also ein Metallgewebe auf. In diesem Falle sieht die Erfindung zur zusätzlichen Reinigung einen in den Zwischenraum jeder Filtereinheit 3 zwischen Außen- und Innenfilter 3.1, 3.2 ragenden Ultraschallwandler 7 vor. Als Koppelmedium zwischen dem Ultraschallwandler 7 und den Filtern 3.1, 3.2 wird eine Flüssigkeit, wie eine CIP-Flüssigkeit 8 eingefüllt.

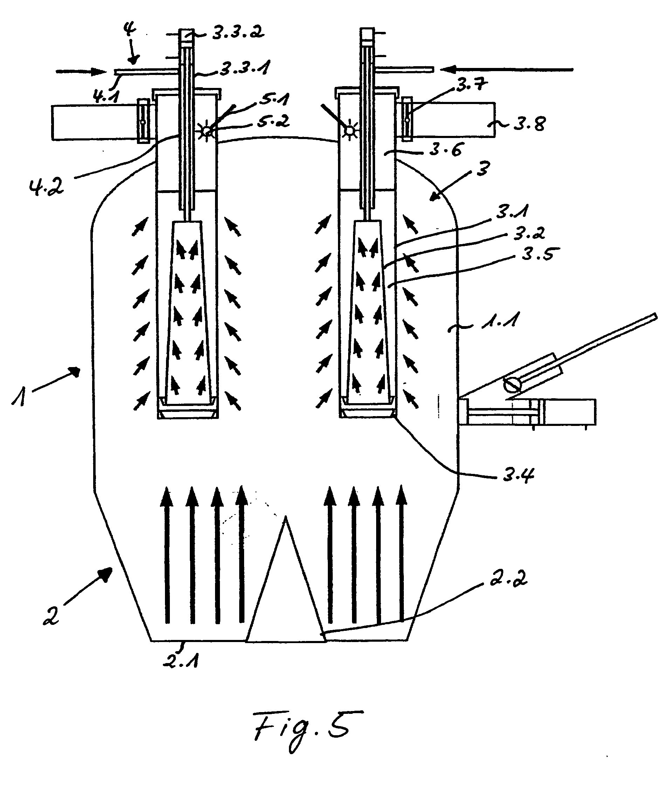

Die Fig. 5 zeigt, dass zur Trocknung der Filter 3.1, 3.2, insbesondere wenn es sich hierbei um Stofffilter handelt, aber auch bei Metallfiltern bei geleertem Prozessraum trockene Luft in den Raum im Inneren des Filterdoms 1.1 durch den luftdurchlässigen Boden 2.1 eingeblasen wird.

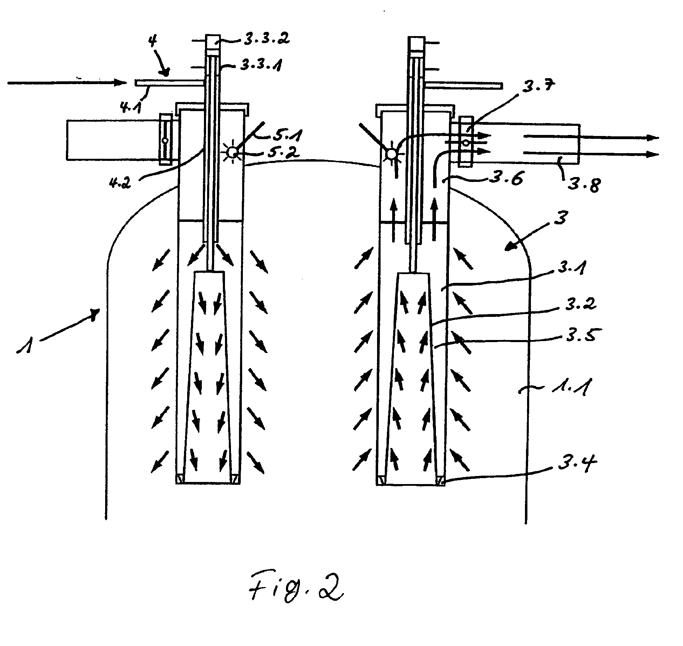

Der Verfahrensablauf zum Reinigen der in dieser Weise erfindungsgemäß ausgestalteten Filtereinheit ist folgendermaßen:
Während des Betriebsprozesses, währenddessen im Prozessbehälter 2 partikelförmiges Gut in der oben beschriebenen Weise unter Einblasen von Luft oder Gas durch den luftdurchlässigen Boden 2.1 behandelt wird, tritt dieses Gas, wie insbesondere der rechten Filtereinheit 3 der Fig. 2 zu entnehmen ist, von außen durch den Außenfilter 3.1 und von innen durch den Innenfilter 3.2 in das Innere der Filtereinheit 3 ein und wird dabei durch die Filter 3.1, 3.2 gereinigt. Es durchströmt den Auslassbereich 3.6 und tritt bei geöffneter Klappe 3.7 über das Abluftrohr 3.8 der Filteranordnung 1 aus, woraufhin es über den Boden 2.1 rückgeführt werden kann.

Sollen die Filter 3.1, 3.2 am Ort (CIP = Cleaning In Place) gereinigt werden, so wird für einen ersten Reinigungsschritt die Klappe 3.7 im Abgaskanal 3.8 geschlossen und anschließend, wie dies in der Fig. 1 und auf der linken Seite der Fig. 2 dargestellt ist, über die Fluidzuführungsleitung 4.1 und die Lanze 4.2 Reinigungsfluid, wie Luft oder ein inertes Gas in das Innere der Filtereinheit 3 und damit von der Reingasseite durch die Filter 3.1, 3.2 hindurchgeblasen, so dass auf der Prozesseite dieser Filter anhaftendes Material, wie Granuliermaterial, Beschichtungsmaterial oder dergleichen von den Filtern abgeblasen wird.

Innen- und Außenfilter 3.1, 3.2 sind dabei in einer Relativstellung, bei der der Ringspalt 3.9 an ihrer Unterseite geschlossen ist.

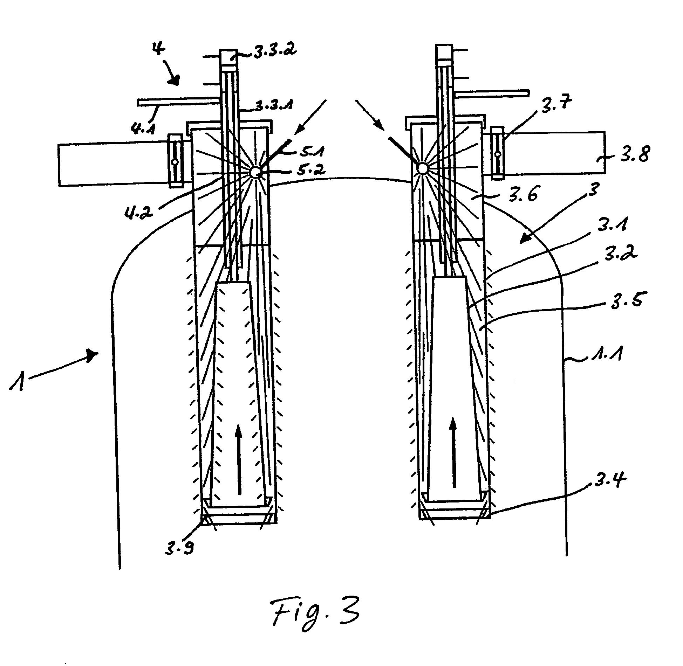

In einem weiteren Schritt wird - bei der Ausgestaltung der Fig. 3 - der Innenfilter 3.2 durch den Antrieb 3.3.2 mittels der Betätigungsstange 3.3.1 gegenüber dem Außenfilter 3.2 (Fig. 3) angehoben, so dass der Ringspalt 3.9 geöffnet wird. Anschließend wird über die Reinigungslanze 5.1 Reinigungsflüssigkeit, sogenannte CIP-Flüssigkeit, in den Innenraum des Außenfilters 3.1 und den Zwischenraum zwischen diesem und dem Innenfilter 3.2 eingesprüht, so dass gegebenenfalls an der Innenseite des Außenfilters 3.1 und/oder der radial außen liegenden Seite des Innenfilters 3.2 anhaftendes Material über den Ringspalt 3.9 ausgespült werden kann.

Handelt es sich bei den Filtern 3.1, 3.2 um Metallfilter, so kann, wie gesagt, zur weiteren Reinigung ein in den Zwischenraum zwischen Außen- und Innenfilter 3.1, 3.2 ragender Ultraschallwandler vorgesehen werden. In diesem Falle wird bei geschlossenem Ringspalt 3.9 weiter Flüssigkeit in den Innenraum der Filtereinheit eingesprüht und zwar mehr, als durch die Filter abfließen kann, wodurch sich Flüssigkeit 8 im Innenraum ansammelt, welche als Kopplungsmedium für den Ultraschall dient. Es erfolgt eine Aktivierung des Ultraschallwandlers 7 und damit eine effektive Abreinigung an der Innenseite des Außenfilters 3.1 und der Außenseite des Innenfilters 3.2 anhaftendem Material, wie Beschichtungsmaterial oder dergleichen, welches in die Flüssigkeit 8 wandert.

Diese kann sodann durch - bei der Ausführungsform der Fig. 3 - Anheben des Innenfilters 3.2 relativ zum Außenfilter 3.1 über den Antrieb 3.3.2 und Vermittlung der Betätigungsstange 3.3.1 abgelassen werden.

In einem weiteren Schritt, der in Fig. 1 dargestellt ist, erfolgt eine Reinigung der Außenseite des Außenfilters 3.1 und der Innenseite des Innenfilters 3.2 mittels des Zielstrahlreinigers 6 durch über dessen Flüssigkeitszuführung 6.1 über dessen Lanze 6.2 und die Auslassdüse 6.3 zugeführte Flüssigkeit (CIP-Flüssigkeit).

Schließlich erfolgt (Fig. 5) eine Trocknung des gesamten Inneren der Filteranordnung 1 und insbesondere der Filtereinheiten 3 durch über den Schlitzboden 2.1 zugeführte trockene Luft oder trockenes Gas.

Die Fig. 6 zeigt rechts eine alternative Ausführungsform einer erfindungsgemäßen Filtereinheit in Gegenüberstellung zu der auf der linken Seite bei der Ausgestaltung der Fig. 1 bis 5 verwirklichten und dort im Detail beschriebenen Filtereinheit.

Die Filtereinheit 3' rechts in der Fig. 6 ist grundsätzlich in gleicher Weise ausgebildet wie die Filtereinheit 3 und weist die gleichen Elemente auf, die mit den gleichen Bezugszeichen versehen sind. Lediglich ist der Innenfilter 3.2 gegenüber dem Außenfilter 3.1 zur Erzeugung des Schlitzspaltes 3.9 absenkbar statt anhebbar.

Die Fig. 7 zeigt mit den beiden Alternativen des anhebbaren bzw. abhebbaren Innenfilters 3.2 eine weitere alternative Ausgestaltung, bei der im Filterdom 1.1 oberhalb der Filter 3 bzw. der Außenfilter 3.1 ein absenkbarer Zwischenboden vorgesehen ist.

### Bezugszeichenliste

- 1: Filteranordnung
- 1.1: Filterdom
- 2: Prozessbehälter
- 2.1: Boden
- 2.2: Konus
- 3,3': Filtereinheiten
- 3.1: Außenfilter
- 3.2: Innenfilter
- 3.3.1: Betätigungsstange, Antriebsstange
- 3.3.2: Antrieb
- 3.4: Ringbereich
- 3.5: Zwischenraum
- 3.6: Auslassbereich, Abluftraum
- 3.7: Verschlusskappe
- 3.8: Abgaskanal
- 3.9: Ringspalt
- 4: Abreinigungsanordung
- 4.1: Fluidzuführungsleitung
- 4.2: Lanze
- 5.1: Reinigungslanze
- 5.2: Auslass
- 6: Zielstrahlreiniger, Ultraschallwandler
- 6.1: Flüssigkeitszuführung
- 6.2: Lanze
- 6.3: Auslassdüse
- 7: Ultraschallwandler
- 8: (CIP-)Flüssigkeit

## Patentansprüche

1. Filteranordnung zum Reinigen von mit Partikeln verunreinigten Gasen, mit mindestens einer Filtereinheit (3) mit einem Außen- und einem Innenfilter (3.1, 3.2), die im Betrieb über einen unteren geschlossenen Ringbereich verbunden sind, **dadurch gekennzeichnet, dass** Außen- und Innenfilter (3.1, 3.2) unter Freigabe einer Roh- und Reingasraum verbindenden Öffnung in ihrem unteren Bereich relativ zueinander bewegbar sind.

2. Anordnung nach Anspruch 1, **dadurch gekennzeichnet, dass** Außen- und Innenfilter (3.1, 3.2) unter Freigabe eines Ringspaltes (3.9) relativ zueinander bewegbar sind.

3. Anordnung nach Anspruch 1 oder 2, **dadurch gekennzeichnet, dass** der Innenfilter (3.2) relativ zum Außenfilter (3.1) anhebbar ist.

4. Anordnung nach Anspruch 1 oder 2, **dadurch gekennzeichnet, dass** der Innenfilter (3.2) relativ zum Außenfilter (3.1) absenkbar ist.

5. Anordnung nach einem der Ansprüche 1 bis 4, **dadurch gekennzeichnet, dass** zur Relativbewegung zwischen Außen- und Innenfilter (3.1, 3.2) ein Antrieb außerhalb der Filtereinheit (3) vorgesehen ist.

6. Anordnung nach einem der vorangehenden Ansprüche, **gekennzeichnet durch** eine Einrichtung (4, 4.1, 4.2) zum Einblasen von Fluid, insbesondere Gas, in den reingasseitigen Bereich (3.5, 3.6) der Filtereinheit (3) und **durch** eine Einrichtung (3.7) zum Absperren des reinraumseitigen Bereichs (3.5, 3.6) der Filtereinheit (3) gegenüber einem Auslass (3.8).

7. Anordnung nach einem der vorangehenden Ansprüche, **gekennzeichnet durch** eine in den reinraumseitigen Bereich (3.5, 3.6) der Filtereinheit (3) führende Flüssigkeitsleitung.

8. Anordnung nach Anspruch 7, **gekennzeichnet durch** eine in den reinraumseitigen Bereich (3.5, 3.6) der Filtereinheit ragende Lanze oder Sprühkopf 5.1, 5.2) zum Einsprühen von Reinigungsflüssigkeit in diesen Bereich der Filtereinheit (3).

9. Anordnung nach einem der vorangehenden Ansprüche, **gekennzeichnet durch** einen in einen Zwischenraum zwischen Außen- und Innenfilter (3.1, 3.2) ragenden Ultraschallwandler (7) zur Ultraschallreinigung der Filter (3.1, 3.2).

10. Anordnung nach einem der vorangehenden Ansprüche, **gekennzeichnet durch** eine in den der Reingasseite (3.5, 3.6) abgewandten Außenraum der mindestens einen Filtereinheit (3), insbesondere in einen diese umgebenden Filterdom (1.1), ragende Reinigungslanze (5.2) zum Reinigen der dem teilchenbeladenden Gas ausgesetzten Seiten der Filtereinheit (3) mittels Flüssigkeit.

11. Verfahren zum Reinigen mindestens einer Filtereinheit (3) mit einem Außenfilter (3.1) und einem in diesem befindlichen Innenfilter (3.2) einer Filteranordnung, wobei Außen- und Innenfilter im Betrieb über einen unteren geschlossenen Ringraum verbunden sind, **dadurch gekennzeichnet, dass** der reingasseitige Bereich (3.5, 3.6) der Filtereinheit (3) unter Freigabe eines Roh- und Reingasraum verbindenden Spaltes im unteren Bereich mittels Relativbewegen von Außen- und Innenfilter (3.1, 3.2) durch eingesprühtes Reinigungsfluid gereinigt wird, das durch den unteren Spalt abfließt.

12. Verfahren nach Anspruch 11 **dadurch gekennzeichnet, dass**, vorzugsweise vorab, unter Abschluss eines Gasauslasses (3.8) vom reinraumseitigen Bereich (3.5, 3.6) der Filtereinheit (3) Reinigungsgas in die Filtereinheit (3.5) und entgegen der Strömungsrichtung beim Reinigungsbetrieb derselben durch deren Filter (3.1, 3.2) eingeblasen wird.

13. Verfahren nach Anspruch 11 oder 12, **dadurch gekennzeichnet, dass** Metallfilter der Filtereinheit (3) unter Einbringen von Kopplungsflüssigkeit in den Zwischenraum zwischen Außen- und Innenfilter (3.1, 3.2) bei geschlossenem Spalt (3.9) zwischen den beiden Filtern (3.1, 3.2) mittels einer in den Zwischenraum ragenden Ultraschalllanze gereinigt werden.

14. Verfahren nach einem der Ansprüche 11 bis 13, **dadurch gekennzeichnet, dass** dem Reingasraum (3.5, 3.6) der Filtereinheit (3) abgewandte Bereiche des Filters mittels einer aus einer Reinigungslanze ausgestoßenen Reinigungsflüssigkeit gereinigt werden.

15. Verfahren nach einem der Ansprüche 11 bis 14, **dadurch gekennzeichnet, dass** ein Trocknen der mindestens einen Filtereinheit (3) unter Öffnen des Spaltes zwischen Außen- und Innenfilter (3.1, 3.2) erfolgt.

16. Verfahren nach einem der Ansprüche 11 bis 15, **dadurch gekennzeichnet, dass** der Spalt im unteren Bereich zwischen Außen- und Innenfilter (3.1, 3.2) der mindestens einen Filtereinheit (3) durch Absenken oder Anheben des Innenfilters (3.2) gegenüber dem Außenfilter (3.1) geöffnet und durch entgegengesetzte Bewegung geschlossen wird.

## Claims

1. Filter arrangement for cleaning gases contaminated with particles, with at least one filter unit (3) with an exterior filter and an interior filter (3.1, 3.2), which are connected via a lower closed ring area during operation, **characterized in that** the exterior and interior filters (3.1, 3.2) can be moved relative to one another while exposing a gap in the lower region thereof.

2. Arrangement in accordance with claim 1, **characterized in that** the exterior and interior filters (3.1, 3.2) can be moved relative to one another while exposing an annular gap (3.9).

3. Arrangement in accordance with claim 1 or 2, **characterized in that** the interior filter (3.2) can be raised relative to the exterior filter (3.1).

4. Arrangement in accordance with claim 1 or 2, **characterized in that** the interior filter (3.2) can be lowered relative to the exterior filter (3.1).

5. Arrangement in accordance with one of the claims 1 through 4, **characterized in that** a drive is provided outside the filter unit (3) for the relative motion between the exterior and interior filters (3.1, 3.2).

6. Arrangement in accordance with one of the above claims, **characterized by** a means (4, 4.1, 4.2) for blowing in fluid, especially gas, into the region (3.5, 3.6) of the filter unit (3) on the clean gas side and by a means (3.7) for closing the region (3.5, 3.6) of the filter unit (3) on the clean space side against an outlet (3.8).

7. Arrangement in accordance with one of the above claims, **characterized by** a liquid line leading into the region (3.5, 3.6) of the filter unit (3) on the clean space side.

8. Arrangement in accordance with claim 7, **characterized by** a lance or spray head (5.1, 5.2) protruding into the region (3.5, 3.6) of the filter unit on the clean space side for spraying cleaning liquid into said region of the filter unit (3).

9. Arrangement in accordance with one of the above claims, **characterized by** an ultrasound transducer (7) protruding into an intermediate space between the exterior and interior filters (3.1, 3.2) for the ultrasonic cleaning of the filters (3.1, 3.2).

10. Arrangement in accordance with one of the above claims, **characterized by** a cleaning lance (5.2) protruding into the exterior space of the at least one filter unit (3), which said exterior space faces away from the clean gas side (3.5, 3.6), especially into a filter dome (1.1) surrounding same [said filter unit (3)], for cleaning the sides of the filter unit (3) exposed to the gas contaminated with particles by means of a liquid.

11. Process for cleaning at least one filter unit (3) with an exterior filter (3.1) and with an interior filter (3.2) of a filter arrangement, which said interior filter is located in said exterior filter, **characterized in that** the region (3.5, 3.6) of the filter unit (3) on the clean gas side is cleaned by means of]a cleaning fluid sprayed while a gap is exposed in the lower region of the exterior and interior filters (3.1, 3.2) through which gap the cleaning fluid drains off.

12. Process in accordance with claim 11, **characterized in that** cleaning gas is blown into the filter unit (3.5) and against the direction of flow preferably in advance, while closing a gas outlet (3.8) from the region (3.5, 3.6) of the filter unit (3) on the clean space side during the cleaning operation of said filter unit through the filters (3.1, 3.2) of said filter unit.

13. Process in accordance with claim 11 or 12, **characterized in that** metal filters of the filter unit (3) are cleaned by means of an ultrasound lance protruding into the intermediate space while introducing a coupling liquid into the intermediate space between the exterior and interior filters (3.1, 3.2) with the gap (3.9) between the two filters (3.1, 3.2) closed.

14. Process in accordance with one of the claims 11 through 13, **characterized in that** regions of the filter facing away from the clean gas space (3.5, 3.6) are cleaned by means of a cleaning liquid ejected from a cleaning lance.

15. Process in accordance with one of the claims 11 through 14, **characterized in that** drying of the at least one filter unit (3) is carried out while opening the gap between the exterior and interior filters (3.1, 3.2).

16. Process in accordance with one of the claims 11 through 15, **characterized in that** the gap in the lower region between the external and internal filters (3.1, 3.2) of the at least one filter unit (3) is opened by lowering or raising the interior filter (3.2) in relation to the exterior filter (3.1) and closed by an opposite motion.

## Revendications

1. Dispositif de filtrage destiné à laver des gaz contaminés avec des particules, avec au moins une unité de filtrage (3) dotée d'un filtre extérieur et d'un filtre intérieur (3.1, 3.2) reliés en fonctionnement via une zone annulaire fermée inférieure, **caractérisé en ce que** le filtre extérieur et le filtre intérieur (3.1, 3.2) peuvent être déplacés l'un par rapport à l'autre par libération dans la zone inférieure d'une ouverture reliant l'espace de gaz brut et l'espace de gaz propre.

2. Dispositif selon la revendication 1, **caractérisé en ce que** le filtre extérieur et le filtre intérieur (3.1, 3.2) peuvent être déplacés l'un par rapport à l'autre par libération d'une fente annulaire (3.9).

3. Dispositif selon la revendication 1 ou 2, **caractérisé en ce que** le filtre intérieur (3.2) peut être soulevé par rapport au filtre extérieur (3.1).

4. Dispositif selon la revendication 1 ou 2, **caractérisé en ce que** le filtre intérieur (3.2) peut être abaissé par rapport au filtre extérieur (3.1).

5. Dispositif selon l'une quelconque des revendications 1 à 4, **caractérisé en ce qu'**un entraînement est prévu à l'extérieur de l'unité de filtrage (3) pour permettre un déplacement relatif entre le filtre extérieur et le filtre intérieur (3.1, 3.2).

6. Dispositif selon l'une quelconque des revendications précédentes, **caractérisé par** un dispositif (4, 4.1, 4.2) permettant d'insuffler un fluide, notamment un gaz, dans la zone (3.5, 3.6) située côté gaz propre de l'unité de filtrage (3) et à travers un dispositif (3.7) afin de bloquer la zone (3.5, 3.6) située côté espace propre de l'unité de filtrage (3) par rapport à un orifice d'évacuation (3.8).

7. Dispositif selon l'une quelconque des revendications précédentes, **caractérisé par** une conduite de fluide conduisant dans la zone (3.5, 3.6) située côté espace propre de l'unité de filtrage (3).

8. Dispositif selon la revendication 7, **caractérisé par** une lance ou une tête de pulvérisation (5.1, 5.2) saillant dans la zone (3.5, 3.6) située du côté de l'espace propre de l'unité de filtrage pour injecter du fluide de nettoyage dans cette zone de l'unité de filtrage (3).

9. Dispositif selon l'une quelconque des revendications précédentes, **caractérisé par** un convertisseur d'ultrasons (7) saillant dans un interstice situé entre le filtre extérieur et le filtre intérieur (3.1, 3.2) pour nettoyer par ultrasons les filtres (3.1, 3.2).

10. Dispositif selon l'une quelconque des revendications précédentes, **caractérisé par** une lance de nettoyage (5.2) saillant dans l'espace extérieur opposé au côté gaz propre (3.5, 3.6) de l'au moins une unité de filtrage (3), notamment dans un dôme de filtrage (1.1) l'entourant, pour nettoyer à l'aide du fluide le côté de l'unité de filtrage (3) exposé au gaz chargé de particules.

11. Procédé de lavage d'au moins une unité de filtrage (3) dotée d'un filtre extérieur (3.1) et d'un filtre intérieur (3.2) situé dans celui-ci d'un dispositif de filtrage, le filtre extérieur et le filtre intérieur étant reliés en fonctionnement via un espace annulaire fermé inférieur, **caractérisé en ce que**, en libérant une fente reliant l'espace de gaz brut et l'espace de gaz propre dans la zone inférieure par déplacement relatif du filtre extérieur et du filtre intérieur (3.1, 3.2), la zone (3.5, 3.6) située côté gaz propre de l'unité de filtrage (3) est nettoyée, à l'aide d'un fluide de nettoyage disperser s'écoulant à travers la fente inférieure.

12. Procédé selon la revendication 11, **caractérisé en ce que**, de préférence en amont, du gaz de nettoyage est insufflé dans l'unité de filtrage (3.5) et à travers ses filtres (3.1, 3.2) dans la direction d'écoulement contraire lors de son fonctionnement en mode nettoyage en raccordant un orifice d'évacuation de gaz (3.8) depuis la zone (3.5, 3.6) située côté de l'espace propre de l'unité de filtrage (3).

13. Procédé selon la revendication 11 ou 12, **caractérisé en ce que** les filtres métalliques de l'unité de filtrage (3) sont nettoyés en amenant du liquide de couplage dans l'interstice prévu entre le filtre extérieur et le filtre intérieur (3.1, 3.2) lorsque la fente (3.9) est fermée, entre les deux filtres (3.1, 3.2), à l'aide d'une lance à ultrasons saillant dans l'interstice.

14. Procédé selon l'une quelconque des revendications 11 à 13, **caractérisé en ce que** les zones du filtre opposées à l'espace de gaz propre (3.5, 3.6) de l'unité de filtrage (3) sont nettoyées à l'aide d'un fluide de nettoyage sortant d'une lance de nettoyage.

15. Procédé selon l'une quelconque des revendications 11 à 14, **caractérisé en ce qu'**un séchage de l'au moins une unité de filtrage (3) se produit lors de l'ouverture de la fente positionnée entre le filtre extérieur et le filtre intérieur (3.1, 3.2).

16. Procédé selon l'une quelconque des revendications 11 à 15, **caractérisé en ce que** la fente est ouverte dans la zone inférieure située entre le filtre extérieur et le filtre intérieur (3.1, 3.2) de l'au moins une unité de filtrage (3) par abaissement ou soulèvement du filtre intérieur (3.2) par rapport au filtre extérieur (3.1) ouvert et fermée par le mouvement contraire.
